# DEMANDE DE BREVET EUROPEEN

(11) **EP 1 229 625 A1**
(43) Date de publication de la demande: **07.08.2002**
(21) Numéro de dépôt: 02290234.0
(22) Date de dépôt: 01.02.2002
(51) Int. Cl.: H02G 3/04

(54) **Goulotte composable**

(30) Priorité: 05.02.2001 FR 0101504
(71) Demandeur: LEGRAND, F-87000 Limoges (FR); LEGRAND SNC, F-87000 Limoges (FR)
(72) Inventeur: Jadaud, Alain, 72240 Tennie (FR); Decore, Bertrand, 72650 La Chapelle Saint Aubin (FR); Gautier, Bruno, 72140 Sille le Guillaume (FR)
(74) Mandataire: CABINET BONNET-THIRION

(57) **Abrégé**

L'invention concerne une goulotte composable (100) comprenant un socle formé par l'assemblage d'un fond (110) et d'au moins une paroi longitudinale (120) à l'aide de moyens d'assemblage coopérant entre eux.

Selon l'invention, le fond porte une nervure longitudinale (113) présentant une section globalement en T avec une âme (114) et deux ailes (115, 116) inclinées par rapport à l'âme en direction de son pied (114a), lesdites ailes présentant des profils courbes qui se raccordement continûment au sommet de ladite nervure longitudinale de façon à former une surface convexe (115a, 116a) orientée dans une direction opposée au pied de la nervure longitudinale, et en ce que la paroi longitudinale comporte, à une extrémité libre (121), une pince présentant deux branches (127, 123) portant à leur extrémité libre un bourrelet d'encliquetage (128,126), au moins une desdites branches étant déformable élastiquement pour autoriser l'encliquetage de ladite pince sur lesdites ailes, ladite surface convexe formée par lesdites ailes constituant, lors de la mise en place de ladite paroi longitudinale sur le fond dudit socle, une surface d'écartement des branches de ladite pince, provoquant la déformation d'au moins une desdites branches et facilitant l'encliquetage de celle-ci sur les ailes de ladite nervure longitudinale.

## Description

La présente invention concerne une goulotte composable comprenant un socle formé par l'assemblage d'un fond et d'au moins une paroi longitudinale à l'aide de moyens d'assemblage coopérant entre eux.

On connaît déjà un grand nombre de goulottes composables de différents types.

Un premier type de goulottes composables comporte un fond pourvu, à proximité de ses bords longitudinaux, de rainures longitudinales destinées à accueillir par encliquetage des languettes d'encliquetage prévues à l'extrémité libre des parois parallèles correspondantes.

De telles goulottes composables sont notamment décrites dans les documents US 3 927 698, GB 1 500 561 et GB 2 174 254.

Un deuxième type de goulottes composables comporte un fond portant, à proximité de ses bords longitudinaux, des éléments mâles en forme de sapin sur lesquels viennent s'engager des moyens de rainure de forme complémentaire présents à l'extrémité libre des parois longitudinales correspondantes.

De telles goulottes composables sont notamment décrites dans les documents DE 38 41 825 et EP 0 271 891.

Dans les goulottes des deux types précités, l'assemblage de chaque paroi sur le fond du socle de la goulotte s'effectue par encliquetage selon une direction perpendiculaire au fond. Une telle mise en place demande un effort important.

En outre, dans le deuxième type de goulottes précité, il n'est pas possible de démonter chaque paroi du fond du socle de la goulotte sans la dégrader, ce qui interdit une évolution ultérieure de la goulotte en fonction de l'évolution de l'installation électrique dans laquelle elle intervient.

D'autres types de goulottes font intervenir, en tant que moyens d'assemblage du fond et de parois longitudinales, des moyens de rotule nécessitant une mise en place de chaque paroi sur le socle selon un mouvement de rotation de l'extérieur vers l'intérieur de la goulotte.

De telles goulottes sont notamment décrites dans les documents EP 0 562 499 et EP 0 767 521.

Enfin, on connaît du document DE 198 53 043 une goulotte composable comprenant un socle formé par l'assemblage d'un fond et d'au moins une paroi longitudinale à l'aide de moyens d'assemblage coopérant entre eux, le fond portant, sur un de ses bords longitudinaux, une nervure longitudinale présentant une section globalement en forme de flèche.

L'âme de ladite nervure longitudinale est rattachée, au bord longitudinal correspondant du fond du socle, par une charnière, réalisée dans une matière souple autre que celle constituant le fond du socle, cette charnière permettant à ladite nervure longitudinale de pivoter entre deux positions, à savoir une première position dans laquelle elle s'étend dans le plan du fond et une deuxième position dans laquelle elle s'étend perpendiculairement à ce fond.

Selon ce document, le fond du socle porte, à proximité de son bord longitudinal auquel est rattachée la nervure longitudinale, une autre nervure longitudinale en forme de crochet.

Quant à la paroi longitudinale de ce socle, celle-ci comporte, à une extrémité de montage, une pince dont les faces internes en regard définissent des moyens de rainure de forme complémentaire de la pointe de la nervure longitudinale en forme de flèche et dont une des branches porte à l'extérieur un crochet destiné à coopérer avec l'autre nervure longitudinale en forme de crochet portée par le fond du socle.

La mise en place de ladite paroi longitudinale sur le fond du socle est réalisée alors de la manière suivante.

Les moyens de rainure de la paroi longitudinale sont engagés sur la pointe de la nervure longitudinale positionnée dans sa première position.

Puis, la paroi longitudinale assemblée sur la nervure longitudinale est redressée grâce à la charnière pour être positionnée perpendiculairement au fond du socle, le crochet de la pince prévue à l'extrémité de la paroi longitudinale venant s'accrocher sur le crochet de l'autre nervure longitudinale portée par le fond du socle.

Outre le fait que les moyens de rotule décrits dans les documents EP 0 562 499 et EP 0 767 521 ou les moyens d'assemblage à nervure pivotante décrits dans le document DE 198 53 043 sont complexes, ils nécessitent pour leur mise en oeuvre un mouvement de rotation important de l'extérieur vers l'intérieur de la goulotte, ce qui impose, dans le cas d'une utilisation d'une telle goulotte dans un angle, le long d'une paroi, comme cela arrive souvent en pratique, d'assembler lesdites parois et le fond du socle de la goulotte avant de fixer l'ensemble sur son support.

Un tel assemblage préliminaire prive la goulotte composable d'un de ses avantages, à savoir de permettre dans un premier temps la pose d'un fond plat, c'est-à-dire sans ses ailes latérales, ce qui est beaucoup plus aisé et par conséquent plus rapide que la pose d'un socle classique en forme de U, puis dans un deuxième temps le montage des parois longitudinales sur ledit fond.

Afin de résoudre l'ensemble des inconvénients précités, la présente invention propose une nouvelle goulotte composable selon la revendication 1.

Ainsi, la disposition de la goulotte selon l'invention permet une mise en place sans effort important de la paroi longitudinale sur le fond par un mouvement de basculement de l'intérieur de la goulotte vers l'extérieur, un des bourrelets d'une des branches de la pince étant accroché à une aile inclinée de la nervure longitudinale portée par ledit fond pour former le pivot de rotation de la paroi sur le fond en vue de son encliquetage. Dans ce cas, la surface externe de l'autre aile inclinée de la nervure forme, avantageusement, une rampe de guidage pour l'encliquetage du bourrelet de l'autre branche de la pince.

Cet encliquetage par basculement de la paroi longitudinale sur la nervure longitudinale associée demande un faible effort.

Une telle disposition selon l'invention permet également, avec un effort important, tout du moins largement supérieur à celui que demande le mouvement de basculement, d'encliqueter la paroi longitudinale sur le fond du socle de la goulotte par un mouvement de translation selon une direction perpendiculaire audit fond. Dans ce cas, les surfaces externes des deux ailes inclinées de la nervure longitudinale portée par ledit fond forment des rampes de guidage pour l'encliquetage des bourrelets de la pince.

D'autres caractéristiques avantageuses et non limitatives de la goulotte composable selon l'invention sont les suivantes :
- lesdites ailes de la nervure longitudinale sont inclinées selon des directions divergentes ;
- lesdites branches de la pince portée par ladite paroi longitudinale sont différentes ;
- une desdites branches de la pince s'étend dans le prolongement de ladite paroi longitudinale en constituant une partie de cette dernière, et l'autre desdites branches de la pince est constituée par un jambage en forme de crochet porté par une face de ladite paroi longitudinale ;
- l'extrémité libre dudit jambage portant le bourrelet d'encliquetage est positionnée à distance de l'extrémité inférieure de ladite paroi longitudinale reposant sur le fond dudit socle ;
- lesdites branches de la pince portée par ladite paroi longitudinale sont identiques ;
- ladite extrémité libre de ladite paroi longitudinale portant ladite pince présente la forme d'une fourche dont les deux dents élastiquement déformables constituent lesdites branches de ladite pince, chacune desdites dents présentant une surface intérieure inclinée destinée à venir en appui contre une aile inclinée de ladite nervure longitudinale ;
- ladite paroi longitudinale est une aile latérale de la goulotte qui comporte, à son autre extrémité libre, un retour en équerre comprenant des moyens de montage d'un couvercle de fermeture de ladite goulotte ;
- le fond porte, à proximité de chacun de ses deux bords d'extrémité longitudinaux, une nervure longitudinale pour le montage d'une paroi longitudinale formant une aile latérale de la goulotte ;
- ladite paroi longitudinale est une cloison de séparation de l'espace intérieur de la goulotte ;
- ladite cloison de séparation comporte à son autre extrémité libre, sur chacune de ses deux faces, un retour en équerre comprenant des moyens de montage d'un couvercle de fermeture de ladite goulotte ;
- le fond dudit socle porte une pluralité de nervures longitudinales dont deux sont positionnées à proximité de ses bords d'extrémité longitudinaux et au moins une est positionnée dans une partie centrale dudit fond pour le montage d'une pluralité de parois longitudinales dont deux forment les ailes latérales de la goulotte et au moins une forme une cloison de séparation de l'espace intérieur de la goulotte ;
- chaque paroi longitudinale est formée d'une seule pièce par moulage d'une matière plastique ou d'une matière métallique ; et
- le fond est formé d'une seule pièce par moulage d'une matière plastique ou d'une matière métallique.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en bout d'un premier mode de réalisation de la goulotte composable selon l'invention ;
- les figures 2 et 3 sont des vues partielles en bout de la goulotte représentée sur la figure 1 représentant les étapes de montage d'une paroi longitudinale sur le fond du socle de ladite goulotte ;
- la figure 4 est une vue en bout d'un deuxième mode de réalisation d'une goulotte selon l'invention ouverte ;
- la figure 5 représente la goulotte de la figure 4 fermée par ses couvercles de fermeture ;
- les figures 6a à 6e sont des vues en bout de parois longitudinales d'une goulotte composable selon l'invention, présentant différentes hauteurs ; et
- les figures 7a à 7f sont des vues en bout de fonds d'une goulotte composable selon l'invention présentant différentes largeurs.

En préliminaire on notera que les parties identiques ou similaires des différents modes de réalisation représentés sur les différentes figures seront, dans la mesure du possible, référencées par les mêmes signes de référence et ne seront pas décrites à chaque fois.

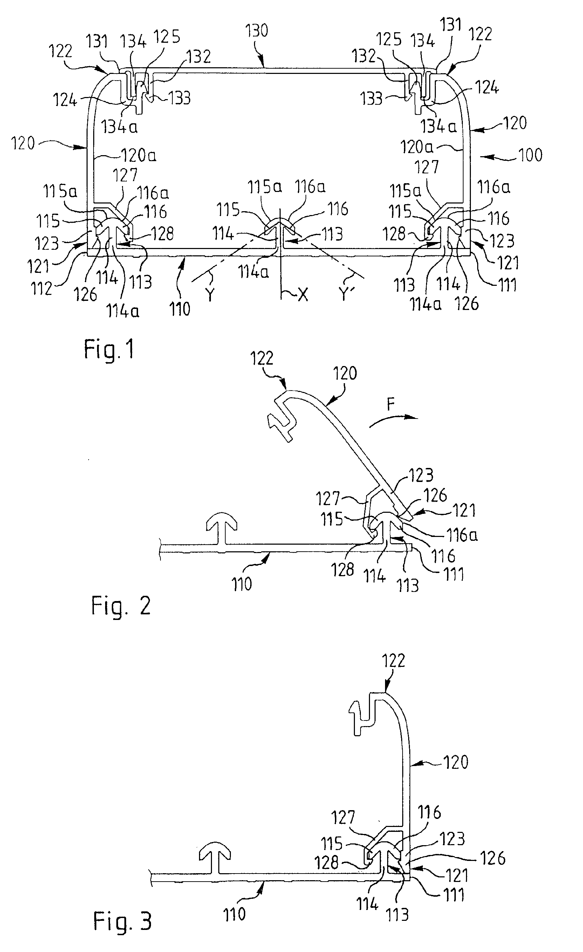

Sur la figure 1 on a représenté une goulotte composable 100 comprenant un socle formé par l'assemblage d'un fond 110 et de deux parois longitudinales 120 à l'aide de moyens d'assemblage coopérant entre eux. Lesdites parois longitudinales 120 constituent ici les ailes latérales de la goulotte.

Selon une caractéristique avantageuse de la goulotte composable 100 représentée sur la figure 1, le fond 110 porte, à proximité de chacun de ses deux bords d'extrémité longitudinaux 111, 112, une nervure longitudinale 113 qui présente une section globalement en T avec une âme 114 et deux ailes 115, 116 inclinées par rapport à l'âme 114 en direction de son pied 114a.

Bien entendu, chaque nervure longitudinale 113 est reliée de manière rigide au fond 110.

Chaque paroi longitudinale 120 comporte, à une extrémité libre 121 destinée à venir en appui contre le fond 110 du socle de la goulotte, une pince présentant deux branches 127, 123, chaque branche 127, 123 portant, à son extrémité libre, un bourrelet d'encliquetage 128, 126 pour son accrochage sur les ailes 115, 116 inclinées de la nervure longitudinale 113 correspondante.

A cet effet, au moins une desdites branches de la pince, ici la branche 127, est déformable élastiquement pour autoriser l'encliquetage de ladite pince sur les ailes 115, 116 inclinées de ladite nervure longitudinale 113 portée par ledit fond 110.

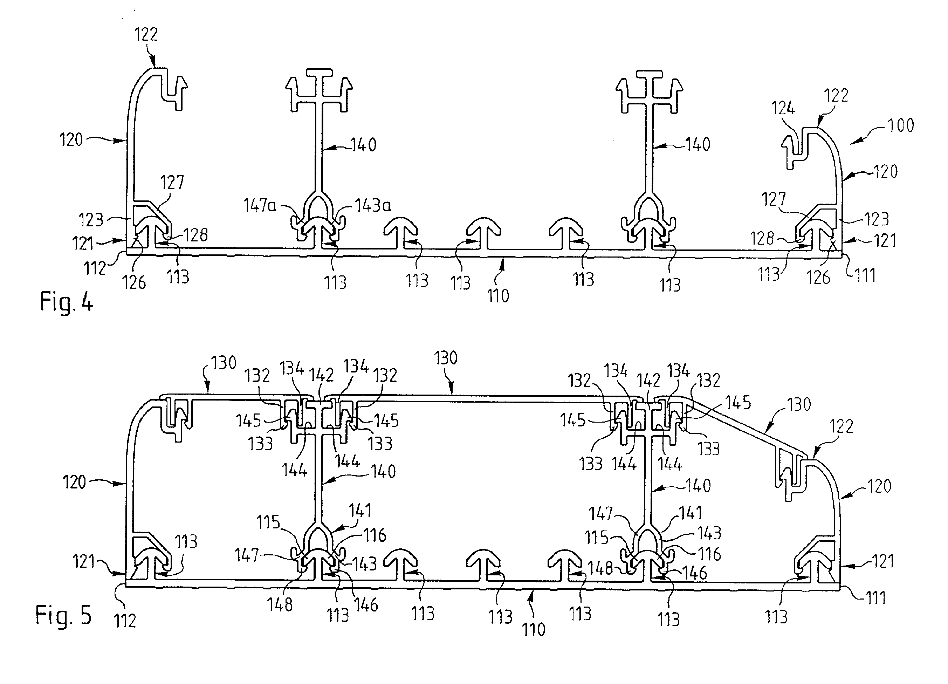

Selon le mode de réalisation représenté sur la figure 1, le fond 110 du socle de la goulotte composable 100 comporte en son milieu une autre nervure longitudinale 113 identique à celles situées à proximité des bords d'extrémité longitudinaux 111, 112 du fond 110, et pouvant servir avantageusement au montage d'une cloison de séparation de l'espace intérieur du socle de la goulotte, comme cela sera décrit plus en détail en référence aux figures 4 et 5.

Les ailes 115, 116 de chaque nervure longitudinale 113 sont inclinées selon des directions divergentes Y, Y' formant un angle aigu avec la direction X selon laquelle s'étend l'âme 114 de la nervure longitudinale 113.

Préférentiellement, les ailes 115, 116 de chaque nervure longitudinale 113 présentent des profils courbes qui se raccordent continûment au sommet de ladite nervure longitudinale de telle sorte qu'elles forment ici avantageusement une surface convexe 115a, 116a orientée dans une direction opposée au pied 114a de la nervure longitudinale 113. Cette surface convexe 115a, 116a constitue, lors de la mise en place de ladite paroi longitudinale 120 sur le fond 110 du socle de la goulotte, une surface d'écartement des branches 127, 123 de la pince située à son extrémité libre 121, provoquant la déformation d'au moins une desdites branches 127 et facilitant l'encliquetage de la pince sur les ailes 115, 116 de ladite nervure longitudinale 113.

Comme le montrent plus particulièrement les figures 1 à 3, selon le mode de réalisation représenté, lesdites branches 127, 123 de la pince portée par chacune des parois longitudinales 120 sont différentes.

Une desdites branches 123 de la pince s'étend dans le prolongement de ladite paroi longitudinale 120, en constituant une partie de cette dernière, elle est donc relativement rigide, et l'autre 127 desdites branches de la pince est constituée par un jambage en forme de crochet présentant une certaine déformabilité élastique. Ce jambage 127 est porté par une face 120a, ici la face intérieure, de la paroi longitudinale 120 correspondante.

L'extrémité libre dudit jambage 127 portant le bourrelet d'encliquetage 128 est positionnée à distance de l'extrémité inférieure de la paroi longitudinale 120 reposant sur le fond 110 dudit socle. Cette disposition est particulièrement avantageuse, parce qu'elle procure une excellente résistance au montage de la pince sur la nervure longitudinale vis-à-vis d'un effort exercé vers l'extérieur sur la paroi longitudinale 120.

En outre, lorsque le couvercle de fermeture 130 est mis en place sur les parois longitudinales 120, la structure assemblée est très résistante aux chocs appliqués sur une des parois longitudinales 120, grâce au jambage 127 de la paroi longitudinale 120 opposée auquel est transmis l'effort.

Au sujet du montage de chaque paroi longitudinale 120 sur une nervure longitudinale 113 portée par le fond 110 du socle de la goulotte, comme le montrent plus particulièrement les figures 2 et 3, chaque paroi longitudinale 120 est mise en place sans effort important par un mouvement de basculement ou de pivotement selon la flèche F, de l'intérieur vers l'extérieur de la goulotte, le bourrelet d'encliquetage 128 du jambage 127 de la pince portée par la paroi longitudinale 120 s'accrochant à l'extrémité libre d'une aile 115 inclinée de la nervure longitudinale 113 portée par ledit fond 110 pour former le pivot de rotation de la paroi longitudinale 120 sur le fond en vue de son encliquetage.

La surface externe 116a de l'autre aile 116 inclinée forme, lors du basculement de la paroi longitudinale 120 selon la flèche F, une rampe de guidage sur laquelle glisse le bourrelet d'encliquetage 126 porté par la branche 123 jusqu'à venir s'encliqueter sur l'extrémité libre de l'aile 116 inclinée de la nervure longitudinale 113.

En position montée, l'extrémité inférieure de la paroi longitudinale 120 repose sur le fond 110 et les deux bourrelets d'encliquetage 128, 126 sont accrochés aux extrémités des ailes inclinées correspondantes de la nervure longitudinale 113.

Toutefois, il est possible, avec un effort légèrement plus important, d'encliqueter chaque paroi longitudinale 120 sur la nervure longitudinale 113 portée par le fond 110, par un mouvement de translation selon une direction perpendiculaire audit fond. Dans ce cas, les surfaces externes convexes 115a, 116a des ailes 115, 116 inclinées de la nervure longitudinale 113 forment des rampes de guidage pour les deux bourrelets 128, 126 de la pince facilitant leur encliquetage aux extrémités libres de celles-ci.

Pour démonter une paroi longitudinale 120 du fond 110 du socle de la goulotte, il suffit, le couvercle ayant été enlevé, d'effectuer un faible effort de basculement de l'extérieur vers l'intérieur de la goulotte pour tout d'abord désencliqueter le bourrelet 126 porté par la pince correspondante puis décrocher l'autre bourrelet 128 porté par l'autre branche 127 de l'extrémité libre de l'aile 115 de la nervure longitudinale 113.

Par un simple mouvement de basculement dans un sens ou dans un autre, on peut alors aisément monter différentes parois longitudinales sur un même fond et composer ainsi facilement un socle de goulotte de forme déterminée.

Bien entendu, avec un tel agencement de montage de la goulotte composable selon l'invention, l'installateur peut aisément fixer le fond 110 plat sur le support de montage (une cloison ou un mur) puis rapporter lesdites parois longitudinales 120 sur ledit fond fixé. Dans le cas d'une telle goulotte à fixer dans un angle, le long d'une paroi, lesdites parois longitudinales 120 sont encliquetées sur ledit fond 110 préalablement fixé sur le support de montage, par un simple mouvement de translation selon une direction perpendiculaire audit fond, un tel mouvement demandant un effort supérieur à celui nécessaire pour un basculement tel que décrit précédemment.

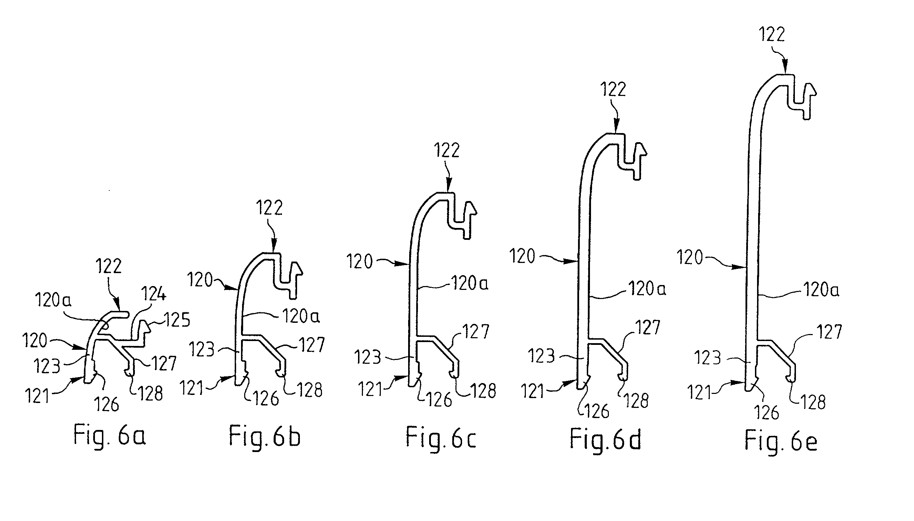

A cet effet, plusieurs parois longitudinales 120, formant des ailes latérales de socles de goulottes, sont représentées sur les figures 6a à 6e. Elles présentent toutes des configurations identiques au niveau de leurs moyens de montage sur un fond de socle de goulotte, c'est-à-dire la pince comportant les deux branches 127, 123 munies à chacune de leurs extrémités des bourrelets d'encliquetage 128, 126, la seule différence se situant au niveau de la hauteur.

En outre, les parois longitudinales 120, qui constituent des ailes latérales du socle de la goulotte composable 100 conforme à l'invention, présentent à leur autre extrémité libre 122 un retour en équerre 124 orienté en direction de l'intérieur du socle de la goulotte et comprenant des moyens de montage d'un couvercle de fermeture 130 de ladite goulotte.

Ces moyens de montage sont constitués par une gorge formée dans le retour en équerre 124 dans laquelle vient s'engager une patte longitudinale 134 portée par le couvercle de fermeture 130, à proximité d'un de ses bords d'extrémité longitudinaux 131, ainsi que par une dent d'accrochage 125 située sur le bord externe de ladite gorge et sur laquelle vient s'accrocher une dent 133 portée par une patte longitudinale 132 portée par le couvercle de fermeture 130.

Pour limiter un éventuel enfoncement du couvercle de fermeture 130 lorsqu'un effort est exercé sur celui-ci, la patte longitudinale 134 dudit couvercle de fermeture présente une longueur telle que son extrémité libre 134a peut prendre appui sur le fond de ladite gorge formée par le retour en équerre 124.

Comme le montre plus particulièrement la figure 5, différentes configurations de couvercle de fermeture 130 peuvent être envisagées en fonction de la hauteur des parois longitudinales 120 montées sur le fond 110 du socle de la goulotte composable 100.

Plus particulièrement, pour faire la jonction entre une paroi longitudinale 140 constituant une cloison de séparation d'une première hauteur et une aile latérale 120 d'une deuxième hauteur inférieure à ladite première hauteur, il est prévu un couvercle de fermeture incliné (voir figure 5). Cela ne change en rien le système de montage dudit couvercle de fermeture dans les retours en équerre, comme cela a été décrit précédemment.

Sur les figures 4 et 5, on a représenté un deuxième mode de réalisation de la goulotte composable 100 qui comporte un fond 110 de plus grande largeur comprenant, comme pour la goulotte représentée sur la figure 1, à proximité de chacun de ses bords d'extrémité longitudinaux 111, 112, des nervures longitudinales 113 (liées rigidement audit fond 110) pour le montage des deux parois longitudinales 120 identiques à celles représentées sur la figure 1 formant les parois ou joues latérales de la goulotte composable 100 et, dans une partie centrale, une série d'autres nervures longitudinales 113 identiques aux deux premières et permettant le montage d'autres parois longitudinales 140 qui portent également, à une de leurs extrémités libres 141, une pince pour leur montage sur lesdites nervures longitudinales 113. Cette pince comporte ici des branches 147, 143 identiques.

Les deux parois longitudinales 140 sont des cloisons de séparation de l'espace intérieur de la goulotte.

Elles présentent des hauteurs identiques et comportent, chacune, à proximité de son extrémité libre 142 venant à la hauteur de l'extrémité libre 122 d'une des ailes latérales 120 de la goulotte composable 100, sur chaque face, un retour en équerre 144 comprenant des moyens de montage d'un couvercle de fermeture 130 de ladite goulotte 100.

Au-dessus de ses retours en équerre 144, chaque cloison de séparation 140 présente une extrémité en forme de T pour établir la jonction entre deux bords d'extrémité longitudinaux de deux couvercles de fermeture 130 adjacents (voir figure 5). En outre, tout comme le retour en équerre 124 de la paroi longitudinale 120, chaque retour en équerre 144 de chaque cloison de séparation 140 forme une gorge pour le montage de la patte longitudinale 134 portée par un couvercle de fermeture 130 à proximité d'un de ses bords d'extrémité longitudinaux 131. A l'extérieur de la gorge formée par chaque retour en équerre 144, celui-ci porte une dent d'encliquetage 145 apte à permettre l'accrochage de la dent 133 portée par la patte longitudinale 132 prévue sur la face intérieure du couvercle de fermeture 130.

Comme cela a été explicité précédemment, à son autre extrémité libre 141, chaque cloison de séparation 140 comporte une pince pour son encliquetage sur une nervure longitudinale 113 portée par le fond 110 du socle de la goulotte. Cette extrémité libre 141 de la cloison de séparation 140 portant ladite pince présente la forme d'une fourche dont les deux dents constituent lesdites branches 147, 143 de la pince et comportent à leur extrémité des bourrelets d'encliquetage 148, 146 destinés à venir s'accrocher aux extrémités des ailes 115, 116 inclinées de la nervure longitudinale 113 correspondante.

Chacune des dents 147, 143 de la fourche formant la pince à l'extrémité libre 141 de la cloison de séparation 140 correspondante, présente une surface intérieure inclinée 147a, 143a destinée à venir en appui contre une partie de la surface externe d'une aile 115, 116 inclinée de la nervure longitudinale 113 lorsque la pince est mise en place sur celle-ci.

Ici, les dents 147, 143 de la fourche sont toutes deux déformables élastiquement.

Ici aussi, tout comme pour le montage des ailes latérales 120, la surface externe convexe formée par les surfaces externes des ailes inclinées de la nervure longitudinale 113 forme une surface d'écartement desdites branches 147, 143 de ladite pince et de guidage des bourrelets d'encliquetage 148, 146 vers leur point d'encliquetage situé aux extrémités desdites ailes 115, 116 inclinées.

L'encliquetage des cloisons de séparation 140 sur les nervures longitudinales 113 est réalisé par pivotement de la même manière que pour le montage d'une aile latérale 120, ou par translation perpendiculairement au fond 110 du socle de la goulotte.

A ce propos, sur les figures 6a à 6e, on a représenté un échantillon d'une gamme d'ailes latérales 120 pour une goulotte composable 100 telle que représentée sur les figures 1 à 5. Sur la figure 6a on a représenté la plus courte aile latérale 120 d'une telle goulotte composable 100 dans laquelle le retour en équerre 124 permettant le montage d'un couvercle de fermeture 130 s'étend à partir du jambage 127 formant une des branches de la pince permettant son encliquetage sur une nervure longitudinale 113 portée par un fond 110 de la goulotte composable 100.

Les parois longitudinales 120, 140, c'est-à-dire les ailes latérales 120 et les cloisons de séparation 140 sont réalisées d'une seule pièce par moulage d'une matière plastique ou d'une matière métallique. Cela est le cas également du fond 110 du socle de la goulotte. Il peut s'agir également d'une matière composite, d'un matériau revêtu ou décoré par tout type de procédé.

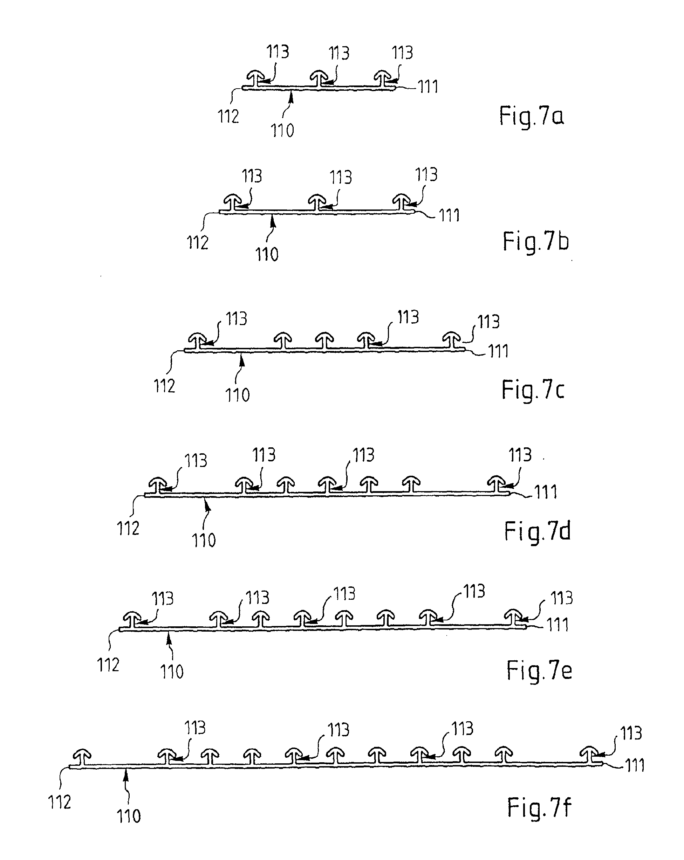

Sur les figures 7a à 7f, on a représenté des fonds 110 de différentes largeurs pour une goulotte composable 100 selon l'invention.

Ces fonds 110 présentent en commun deux nervures longitudinales 113 positionnées à proximité de leurs bords d'extrémité longitudinaux 111, 112. Par contre, en fonction de la largeur de chacun des fonds 110, chaque fond 110 présente une ou plusieurs autres nervures longitudinales 113 dans une région centrale.

La présente invention n'est nullement limitée aux modes de réalisation décrits et représentés, mais l'homme du métier saura y apporter toute variante conforme à son esprit.

## Revendications

1. Goulotte composable (100) comprenant un socle formé par l'assemblage d'un fond (110) et d'au moins une paroi longitudinale (120) à l'aide de moyens d'assemblage coopérant entre eux, **caractérisée en ce que** le fond (110) porte au moins une nervure longitudinale (113) présentant une section globalement en T avec une âme (114) et deux ailes (115, 116) inclinées par rapport à l'âme (114) en direction de son pied (114a), lesdites ailes (115, 116) présentant des profils courbes qui se raccordement continûment au sommet de ladite nervure longitudinale de façon à former une surface convexe (115a, 116a) orientée dans une direction opposée au pied (114a) de la nervure longitudinale (113), et **en ce que** la paroi longitudinale (120) comporte, à une extrémité libre (121), une pince présentant deux branches (127, 123) portant à leur extrémité libre un bourrelet d'encliquetage (128, 126), au moins une desdites branches (127) étant déformable élastiquement pour autoriser l'encliquetage de ladite pince sur lesdites ailes (115, 116), ladite surface convexe (115a, 116a) formée par lesdites ailes (116, 115) constituant, lors de la mise en place de ladite paroi longitudinale (120) sur le fond (110) dudit socle, une surface d'écartement des branches (127, 123) de ladite pince, provoquant la déformation d'au moins une desdites branches (127) et facilitant l'encliquetage de celle-ci sur les ailes (115, 116) de ladite nervure longitudinale (113).

2. Goulotte composable (100) selon la revendication 1, **caractérisée en ce que** lesdites ailes (115, 116) de la nervure longitudinale (113) sont inclinées selon des directions divergentes (Y, Y').

3. Goulotte composable (100) selon l'une des revendications précédentes, **caractérisée en ce que** lesdites branches (127, 123) de la pince portée par ladite paroi longitudinale (120) sont différentes.

4. Goulotte composable (100) selon la revendication 3, **caractérisée en ce qu'**une desdites branches (123) de la pince s'étend dans le prolongement de ladite paroi longitudinale (120) en constituant une partie de cette dernière, et l'autre (127) desdites branches de la pince est constituée par un jambage en forme de crochet porté par une face (120a) de ladite paroi longitudinale.

5. Goulotte composable (100) selon la revendication 4, **caractérisée en ce que** l'extrémité libre dudit jambage (127) portant le bourrelet d'encliquetage (128) est positionnée à distance de l'extrémité inférieure de ladite paroi longitudinale (120) reposant sur le fond (110) dudit socle.

6. Goulotte composable (100) selon l'une des revendications 1 ou 2, **caractérisée en ce que** lesdites branches (127, 123) de la pince portée par ladite paroi longitudinale (120) sont identiques.

7. Goulotte composable (100) selon la revendication 6, **caractérisée en ce que** ladite extrémité libre (141) de ladite paroi longitudinale (140) portant ladite pince présente la forme d'une fourche dont les deux dents élastiquement déformables constituent lesdites branches (147, 143) de ladite pince, chacune desdites dents présentant une surface intérieure inclinée (147a, 143a) destinée à venir en appui contre une aile (115, 116) inclinée de ladite nervure longitudinale (113).

8. Goulotte composable (100) selon l'une quelconque des revendications précédentes, **caractérisée en ce que** ladite paroi longitudinale (120) est une aile latérale de la goulotte qui comporte, à son autre extrémité libre (122), un retour en équerre (124) comprenant des moyens de montage d'un couvercle de fermeture (130) de ladite goulotte.

9. Goulotte composable (100) selon la revendication 8, **caractérisée en ce que** le fond (110) porte, à proximité de chacun de ses deux bords d'extrémité longitudinaux (111, 112), une nervure longitudinale (113) pour le montage d'une paroi longitudinale (120) formant une aile latérale de la goulotte.

10. Goulotte composable (100) selon l'une quelconque des revendications précédentes, **caractérisée en ce que** ladite paroi longitudinale (140) est une cloison de séparation de l'espace intérieur de la goulotte.

11. Goulotte composable (100) selon la revendication 10, **caractérisée en ce que** ladite cloison de séparation (140) comporte à son autre extrémité libre (142), sur chacune de ses deux faces, un retour en équerre (144) comprenant des moyens de montage d'un couvercle de fermeture (130) de ladite goulotte.

12. Goulotte composable (100) selon l'une des revendications précédentes, **caractérisée en ce que** le fond (110) dudit socle porte une pluralité de nervures longitudinales (113) dont deux sont positionnées à proximité de ses bords d'extrémité longitudinaux (111, 112) et au moins une est positionnée dans une partie centrale dudit fond pour le montage d'une pluralité de parois longitudinales (120 ; 140) dont deux forment les ailes latérales de la goulotte et au moins une forme une cloison de séparation de l'espace intérieur de la goulotte.

13. Goulotte composable (100) selon l'une quelconque des revendications précédentes, **caractérisée en ce que** chaque paroi longitudinale (120 ; 140) est formée d'une seule pièce par moulage d'une matière plastique ou d'une matière métallique.

14. Goulotte composable (100) selon l'une quelconque des revendications précédentes, **caractérisée en ce que** le fond (110) est formé d'une seule pièce par moulage d'une matière plastique ou d'une matière métallique.
